(19) **Europäisches Patentamt**

**European Patent Office**

**Office européen des brevets**

(11) **EP 0 707 313 B1**

(12) **EUROPEAN PATENT SPECIFICATION**

(45) Date of publication and mention
of the grant of the patent:
**14.03.2001 Bulletin 2001/11**

(51) Int Cl.⁷: **G11B 20/14**, G11B 20/10,
G11B 11/10

(21) Application number: **95116188.4**

(22) Date of filing: **13.10.1995**

(54) **Information recording and reproducing apparatus**

Informationsaufzeichnungs- und -wiedergabegerät

Appareil d'enregistrement et de reproduction d'information

(84) Designated Contracting States:
**DE FR GB NL**

(30) Priority: **14.10.1994 JP 24987094**
**20.07.1995 JP 18314995**

(43) Date of publication of application:
**17.04.1996 Bulletin 1996/16**

(73) Proprietor: **SEIKO EPSON CORPORATION**
**Shinjuku-ku, Tokyo 163-0811 (JP)**

(72) Inventors:
• **Kobayashi, Michio**
**Suwa-shi, Nagano-ken, 392 (JP)**
• **Nebashi, Satoshi**
**Suwa-shi, Nagano-ken, 392 (JP)**
• **Shimoda, Tatsuya**
**Suwa-shi, Nagano-ken, 392 (JP)**
• **Osawa, Hisashi**
**Matsuyama-shi, Ehime-ken (JP)**
• **Okamoto, Yoshihiro**
**Matsuyama-shi, Ehime-ken (JP)**

(74) Representative: **Hoffmann, Eckart, Dipl.-Ing.**
**Patentanwalt,**
**Bahnhofstrasse 103**
**82166 Gräfelfing (DE)**

(56) References cited:
• **R. HAEB AND R.T. LYNCH: "Trellis Codes for Partial-Response Magnetooptical Direct Overwrite Recording" IEEE JOURNAL ON SELECTED AREAS IN COMMUNICATIONS, vol. 10, no. 1, 1992, pages 182-190, XP000464184**
• **R.T. LYNCH: "Channels and Codes for Magnetooptical Recording" IEEE JOURNAL ON SELECTED AREAS IN COMMUNICATIONS, vol. 10, no. 1, 1992, pages 57-72, XP000462065**
• **H.K. THAPAR, P.A. ZIPEROVICH AND R.W. WOOD: "On the performance of symbol- and fractionally-spaced equalization in digital magnetic recording" EIGHTH INTERNATIONAL CONFERENCE ON VIDEO, AUDIO AND DATA RECORDING, April 1990, BIRMINGHAM, UK, pages 168-175, XP000218952**
• **P.H. SIEGEL AND J.K. WOLF: "Modulation and Coding for Information Storage" IEEE COMMUNICATIONS MAGAZINE, December 1991, pages 68-86, XP000287983**
• **B.H. MARCUS, P.H. SIEGEL AND J.K. WOLF: "Finite-State Modulation Codes for Data Storage" IEEE JOURNAL ON SELECTED AREAS IN COMMUNICATIONS, vol. 10, no. 1, 1992, pages 5-37, XP000462064**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

**Description**

The present invention relates to an information recording and reproducing apparatus such as a magneto-optical recording and reproducing apparatus or an optical recording and reproducing apparatus for reproducing information by means of an optical head, and relates particularly to a partial response method suited for use in combination with a Viterbi decoder for the purpose of high density recording with an improved error correction rate.

Partial response techniques have been proposed as a replacement for peak detection (level detection) type signal detection methods as a means of improving the high density recording capacity of the recording and reproducing signal processing technologies used in digital magnetic recording. These partial response techniques have been described, for example, in JP-A-4-221464/1992 and JP-A-5-2842/1993. It is also known that applying Viterbi decoding techniques to the demodulation system as a maximum likelihood decoding method (error correction decoding) is an effective means of improving the error rate characteristic. Partial response and Viterbi decoding have also been applied in the related field of optical recording and magneto-optical recording as described by Ozawa, Yamauchi, and Tazaki in "Applications of Viterbi decoding using a new variable length block coding and $d$ constraint for magneto-optical recording" (pp. 1369- 1375, *Television Magazine* (in Japanese), 44, 10 (1990)).

The document "Trellis Codes for Partial-Response Magnetooptical Direct Overwrite Recording", R. Haeb and R.T. Lynch, IEEE Journal on Selected Areas in Communications, vol. 10, No. 1, 1992, pp. 182-190, XP000464184 discloses a coding method, which is referred to as "Matched Spectral Null (MSN) code", using a state transition diagram. In this method by utilizing MSN the zero point of a code spectrum (frequency characteristics) is adjusted to a desired position and the run-length of "0" or "1" is constrained to be less than a desired value. Trellis codes for recording and reproducing channels for PR1$\{(1 +D)\}$ and PR2$\{(1 +D)^2\}$ are designed according to a coding method similar to MSN. The points in designing this code are: (1) the code spectrum is made to be similar to that of the frequency characteristics of a recording and reproducing channel, and (2) the minimum Euclidean distance of the trellis code is made to be not less than a fixed value.

The document "On the performance of symbol- and fractionally spaced equalization in digital magnetic recording", H.K. Thapar, P.A. Ziperovich and R.W. Wood, Eighth International Conference on Video, Audio and Data Recording, April 1990, pp. 168-175, XP000218952 relates to a waveform equalization method used for a recording and reproducing channel (1-D) x $(1 + D)^n$, n = 1, 2, for use in magnetic recording. In this context a data sampling period (T/2) of half the normal sampling period is employed.

The document R.T. Lynch, "Channels and Codes for Magnetooptical Recording", IEEE Journal on Selected Areas in Communications, vol. 10, no.1, 1992, pp. 57-72, XP000462065 is concerned with mark-length recording and mark-edge recording for use in an optical or magneto-optical recording method and also to the run-length code used in such method. According to this documant the partial-response channel characteristics should be horizontally symmetrical to achieve the horizontally symmetrical optical recording and reproducing channel characteristics.

The document "Modulation and Coding for Information Storage", P.H. Siegel and J.K. Wolf, IEEE Communications Magazine, December 1991, pp. 68-86, XP000287983 relates to a recording code used in optical recording or magnetic recording and also to recording and reproducing signal processing.

The document "Finite-State Modulation Codes for Data Storage", B.H. Marcus, P.H. Siegel and J.K. Wolf, IEEE Journal on Selected Areas in Communications, vol. 10, no. 1, 1992, pp. 5-37, XP000462064 is concerned with a universal coding method to obtain a (d, k) (RLL) code that satisfies the run-length limitation by setting the coding rate to be p/q. The feature in this document is that a code having a certain (d, k) limitation and having the maximum coding rate or a rate closest to the maximum coding rate is mechanically designed with ease. In this method, an algorithm, which is referred to as "state splitting" is suitably applied to a state transition diagram representing a (d, k) limitation, which is referred to as a "finite state machine".

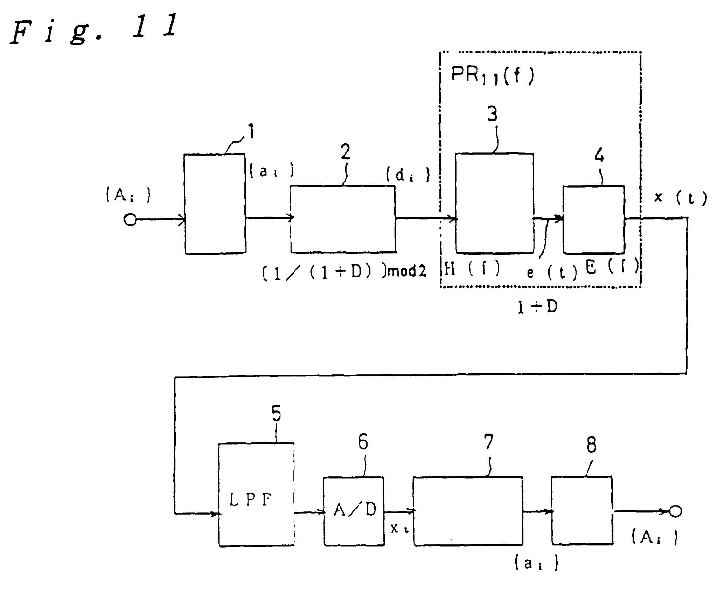

Fig. 11 is a block diagram of a magneto-optical recording and reproducing system using partial response and Viterbi decoding.

To suppress interference (intersymbol interference) of the elementary waveform (readback waveform) as a result of the bandwidth limit of the recording and reproducing system (magneto-optical drive) 3, and to facilitate extraction of the synchronization data from the elementary waveform sequence in this magneto-optical recording and reproducing system, a specific coding modulator 1 is provided for coding according to coding rules matching the characteristics of magneto-optical drive 3. This coding modulator 1 comprises a (2,7) RLL coder for RLL- coding (run-length-limited coding) the input data bit sequence $\{A_i\}$ (a digital information sequence) to be recorded using the minimum run constraint $d$ = 2 and maximum run constraint $k$ = 7; and an NRZI modulator for converting the (2,7) RLL code sequence to an NRZI (non-return-to-zero inversion) code (at symbol 0, level inversion is not applied; only at symbol 1 is level inversion applied at the leading edge of the cell). Constraint $k$ (= 7) of the (2,7) RLL code rule offers the advantage of being able to suppress intersymbol interference. In addition, the mark length modulation of the NRZI modulator helps to improve the recording density.

Furthermore, with the magneto-optical recording and reproducing system shown in Fig. 11, the coded data

sequence {$a_i$} generated by coding modulator 1 is first input to a precoder 2 at a certain position. Precoder 2 has a transfer characteristic that is the inverse of that of the waveform equalizer 4 described below, specifically a [1/(1 + D)] mod2 characteristic. Precoding by the precoder 2 cancels the recording and reproducing characteristics in the output of the waveform equalizer 4 to prevent error propagation by the Viterbi decoder 7 on the output side.

The recording code sequence {$d_i$} from precoder 2 is then recorded to the magnetic thin-film of the magneto-optical recording medium as the elementary waveform sequence to be recorded using the thermal effect of the semiconductor laser of the magneto-optical drive 3.

During the reproduction process, the recorded symbol sequence is read from the magneto-optical recording medium by means of the optical head of magneto-optical drive 3, and amplified by a preamplifier to obtain readback elementary waveform sequence e(t).

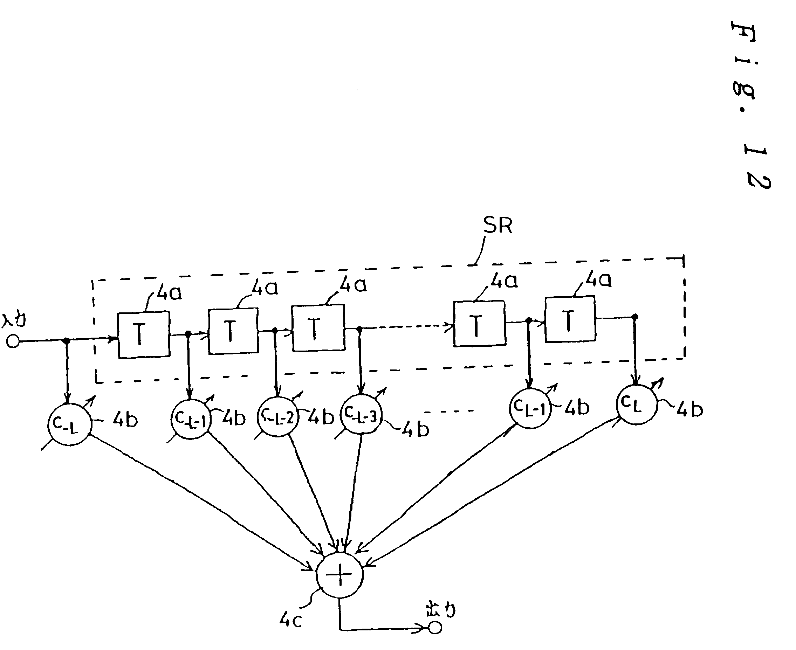

Waveform equalization is then applied to the elementary waveform sequence e(t) by the waveform equalizer 4 to correct the waveform and compensate for waveform interference as a means of achieving high density recording. A transversal filter is generally used for this waveform equalizer 4. As shown in Fig. 12, this filter comprises a serial delay stage (SR) of (2L) serially-connected delay circuits 4a having a delay time T; (2L + 1) weighting circuits (multipliers) 4b for multiplying the output from each tap (signal discrimination point) by a weighting coefficient $c_j$ (where j = -L, ..., -1, 0, +1, ..., +L); and an adder 4c for obtaining the total sum of the weighted products. Note that it is not necessary for the delay time T of the delay circuits 4a to be equal to the cell width $T_b$ of the coded symbol sequence, and delay circuits 4a of delay time T = $T_b$/m (where *m* is a natural number), for example, may be used to reduce waveform equalization error.

When the readback elementary waveform stream e(t) is sampled at the optimum sampling instant $kT_b$, the sampled values are dependent only on the elementary waveform corresponding to the coded symbol. To eliminate interwaveform interference and prevent interference from adjacent elementary waveforms, the first Nyquist condition for zero intersymbol interference (shown below) must be satisfied.

$$e_k = e(kT_b) = e_0 \delta_{k0} \qquad [1]$$

where $T_b$ is the cell width (the time unit of the coded symbol sequence); and $\delta_{k0}$ is the Kronecker delta where $\delta_{ij} = 1$ (when i = j), and $\delta_{ij} = 0$ (when i ≠ j). A rectangular pulse wave, Nyquist waveform, and other waves are elementary waveforms $e_0$ known to satisfy this Nyquist condition, but the most basic waveform known to satisfy the Nyquist condition is the Nyquist waveform (sampling function) r(t) shown below.

$$r(t/T_b - n) = \text{sinc} (t/T_b - n) = \sin (t/T_b - n)/(t/T_b - n) \qquad [2]$$

However, because resolution deteriorates in high density recording and differences in precision occur between different devices even when the Nyquist waveform r(t) is used as the elementary waveform, interwaveform interference unavoidably continues to occur and induces intersymbol interference. Thus, waveform equalizer 4 actually actively uses interwaveform interference. In other words, if h(t) is the output waveform (impulse response waveform) of waveform equalizer 4 to the combined transfer functions of precoder 2, magneto-optical drive 3 and waveform equalizer 4 when an impulse is applied to the input of precoder 2, the output x(t) of waveform equalizer 4 to an encoded data sequence {$a_i$} input to precoder 2 is obtained by equation [3].

$$x(t) = \sum_k a_k h\left(\frac{t}{T_b} - k\right) \qquad [3]$$

where $a_k$ is the data input at time *k*, and T = $T_b$.

If waveform equalizer 4 is a transversal filter having delay circuits 4a of delay time T as shown in Fig. 12, h(t) is expressed by a convolution of Nyquist waveform r(t).

$$h(t) = \sum_{n=0}^{L} Cn\gamma\left(\frac{t}{T_b} - n\right) \qquad [4]$$

where the Nyquist waveform is equivalent to the response component of the delay operation when n ≠ 0, and is known as the partial response. From equations [3] and [4],

$$x(t) = \sum_k a_k \left[ \sum_{n=0}^{L} Cn\gamma\left(\frac{t}{T_b} - n - k\right) \right] = \sum_k a'_k \gamma\left(\frac{t}{T_b} - k\right) \qquad [5]$$

where

$$a'_k = \sum_{n=0}^{L} C_n a_{k-n} \qquad [6]$$

and can be detected as

$$x(t=kT_b) = a'_k \Big|_{\text{mod } N} \qquad [7]$$

from equation [1].

In other words, output $x(t)$ of waveform equalizer 4 is discriminated at a discrete-time discrimination point $(kT_b)$ as a multivalued signal level of (mod N). In general, the weighting coefficients $c_j$ are set at an appropriate integral ratio. A waveform equalizer 4 of which the weighting coefficients $c_j$ are an integral ratio is known as a partial response (PR) circuit. In the partial response method, the output of the PR circuit is generally expressed as $PR(c_0, c_1,..., c_L)$ using the weighting coefficients $c_j$ of the PR circuit. Note that the weighting coefficients $c_j$ may be expanded to include real numbers as necessary. Note, also, that Kretzmer, the developer of the PR method, shows five forms for the PR method: PR(1,1), PR(1,2,1), PR(2,1,-1), PR(1,0,-1), and PR(-1,0,2,-1).

The optical transfer function OTF of magneto-optical recordings suggests a sinc function in the magneto-optical recording and reproducing system shown in Fig. 11, which therefore uses the PR(1,1) method having similar frequency characteristics.

Because $c_0 = c_1 = 1$ in the PR(1,1) method, the output waveform (impulse response) $h(t)$ of waveform equalizer 4 is a composite waveform of $r(t/T_b)$ and the delay waveform $r(t/T_b - 1)$. The amplitude value thus changes $0 \to 1 \to 1 \to 0$ because the discrimination point is every $T_b$, and the impulse input can therefore be detected by discriminating the amplitude value. When delay operator D is used in the PR(1,1) method, digital transfer function G(D) can be expressed as $G(D) = 1 + D$. Thus, an input of $d_k$ obtains an output expressed as $(d_k + d_{k-1})$. When $d_k = d_{k-1} = 1$, the output is 2, and the output level of waveform equalizer 4 is a trivalue output of (0, 1, 2).

The PR method actively uses a waveform having a nonzero response (correlative waveform) to a single stored elementary waveform at plural discrimination points of the readback signal. As a result, the PR method detects the correlation of the constant time change of a level even when there is interwaveform interference, and is known as an equalization method appropriate to the recording and reproducing characteristics of level-correlated encoding such as (2,7) RLL encoding.

Next, white noise added during the readback and equalization processes is removed from the output $x(t)$ of waveform equalizer 4 (Fig. 11) by low pass filter (LPF) 5. The signal is then sampled by A/D converter 6 at a discrete-time point of the cell width, and the sampled values are quantized.

It should be noted that noise is added by waveform equalizer 4 and is actually output as an error series. The readback digital signal quantized by A/D converter 6 is then processed by Viterbi decoder 7 using a maximum-likelihood (ML) decoding method applying the Viterbi algorithm.

ML decoding does not process each signal value at each discrimination point during the discrimination and decoding process, but processes a signal series of a finite length (constraint length). The Viterbi algorithm is one type of ML decoding method, more specifically a sequential trellis search algorithm for ML sequence detection, and assumes that the received (readback) signal sequence can be expressed by a finite automaton model. The transversal filter waveform equalizer 4 shown in Fig. 12 is also a so-called convolution encoder, and the output therefrom can be expressed as a finite automaton model (a machine whereof the output is determined by the internal state and input). The Viterbi algorithm obtains the path (internal state transition path) whereby the metric (likelihood standard) input at each time point is lowest at each time transition point of the trellis diagram (a diagram showing the output code series generated by a state change process of the encoder according to the input information series) of a finite state machine encoder.

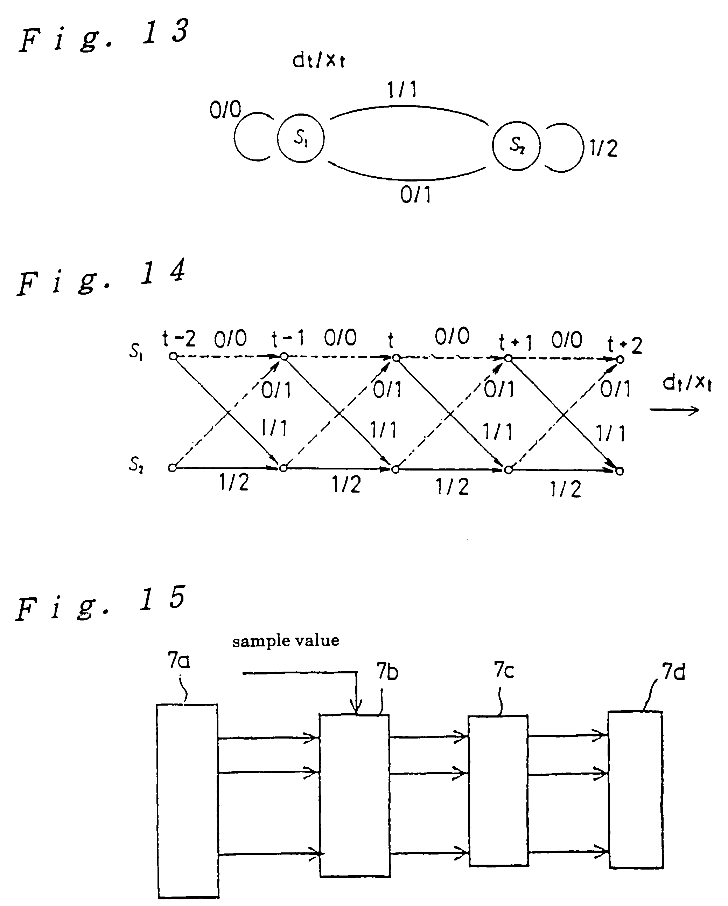

With the magneto-optical recording and reproducing system shown in Fig. 11, Viterbi decoding is used to decode the combination of (2,7) RLL and PR(1,1) encoding. If magneto-optical drive 3 and waveform equalizer 4 are treated as a finite state machine (convolution encoder), the corresponding state transition diagram for their internal states is shown in Fig. 13. The input information series is output $d_t$ (= 0, 1) of precoder 2, and the output code series is output $x_t$ of waveform equalizer 4. Waveform equalizer 4 is the PR(1,1) circuit, and the detected output $x_t$ therefrom is 0, 1, or 2.

Furthermore, because it comprises only one delay element, there are $2^1 = 2$ internal states. If the internal state is expressed as $u_{t-1}$, internal state $u_{t-1} = 0$ corresponds to state $S_1$, and internal state $u_{t-1} = 1$ corresponds to state $S_2$. Note that when the internal state is $S_1$, state $S_1$ is held when the input is 0, and the output is therefore 0. As shown in Fig. 13, the input/output relationship $d_t/x_t$ is expressed as 0/0. When the input is 1, the internal state shifts to state $S_2$, and the output is 1. When input 1 is input to state $S_2$, state $S_2$ is held and the output is 2. When input 0 is input, the internal state shifts to state $S_1$, and the output is 1.

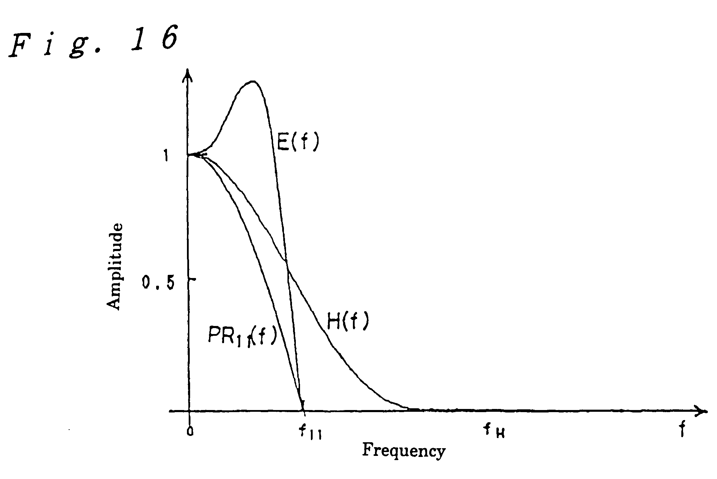

Fig. 14 is a trellis diagram of the time-based internal state changes based on the state transition diagram shown in Fig. 13. In Fig. 14, the dotted directed lines show the transition resulting from input 0, and the solid directed lines show the transition resulting from input 1; the $d_t/x_t$ relationship is shown on each directed line. Simply stated, the Viterbi algorithm first calculates the metrics of plural branches merging at each time point (t-2 $\sim$ t+2), using, for example, the Hamming distance as the branch metric. The path with the smallest branch metric is then saved as the survivor path. If there is more than one path with the same branch metric, any one of the paths may be selected. Because the initial state, the constraint length (which is a guide to the correlation of the encoded sequence), and the final state are known to the demodulation side, it is possible to trace the history of the survivor path from the unique final state to arrive at a unique initial state, and thereby determine the most probable path. By thus considering the correlation of state transitions, it is possible to overcome bit errors in the magneto-optical drive 3 and waveform equalizer 4, and the correct (accurate) information series can be demodulated.

A general description of the configuration of a Viterbi decoder 7 is given below. As shown in Fig. 15, a general Viterbi decoder comprises a hypothetical path memory 7a for storing the expected value obtained from the waveform of a data series of a bit count corresponding to the constraint length; an ACS circuit 7b comprising an adder (A), comparator (B), and selector (C), and obtaining by means of adder (A) the sum of the pre-calculated path metric and the square of the difference of the sample value from A/D converter 6 and the expected value from the hypothetical path memory 7a, comparing the additive outputs by means of comparator (C), and then selecting the smaller value by means of selector (C); a path memory 7c for storing the last values of the selected hypothetical paths; and a path selector 7d for selecting the path with the smallest path metric, and outputting the data at the tail end of the path as the demodulation data.

Demodulator 8 located at the last stage of the system shown in Fig. 11 demodulates the error correction code $\{a_i\}$ obtained from Viterbi decoder 7 to restore the information sequence $\{A_i\}$, and thus effectively inverses the conversion applied by (2,7) RLL and NRZI encoding.

The following problems are presented by the magneto-optical recording and reproducing system described above.

(1) If the transfer function of magneto-optical drive 3 in the magneto-optical recording and reproducing system shown in Fig. 11 is H(f), and the transfer function of waveform equalizer 4 is E(f), it is necessary to determine the weighting coefficients $c_j$ of waveform equalizer 4 necessary and sufficient to satisfy equation [8] below for PR(1,1) partial response coding.

$$H(f) \cdot E(f) = PR_{11}(f) \qquad\qquad [8]$$

where $PR_{11}(f)$ is the transfer function for PR(1,1). If a delay operator $D = \exp(-j\omega T_b)$ is used, PR(1,1) can be digitally expressed as $G(\omega) = (1 + D)$ where $\omega = 2\pi f$. Thus, for transfer function $PR_{11}(f)$, $|G(f)| = |2\cos(\pi F t_b)|$ where the cut-off frequency $f_{11} = 1/2T_b$.

Fig. 16 is a graph of the frequency characteristics of a transfer function with a low recording density. Because the recording density is low, the cut-off frequencey $f_H$ of the recording and reproducing channel transfer function H(f) is higher than the cut-off frequency $f_{11}$ of transfer function $PR_{11}(f)$. If the waveform equalizer 4 is constructed with a transfer function E(f) that drops to zero at cutoff frequency $f_{11}$ in this case, an error-free equalization state can, in principle, be achieved.

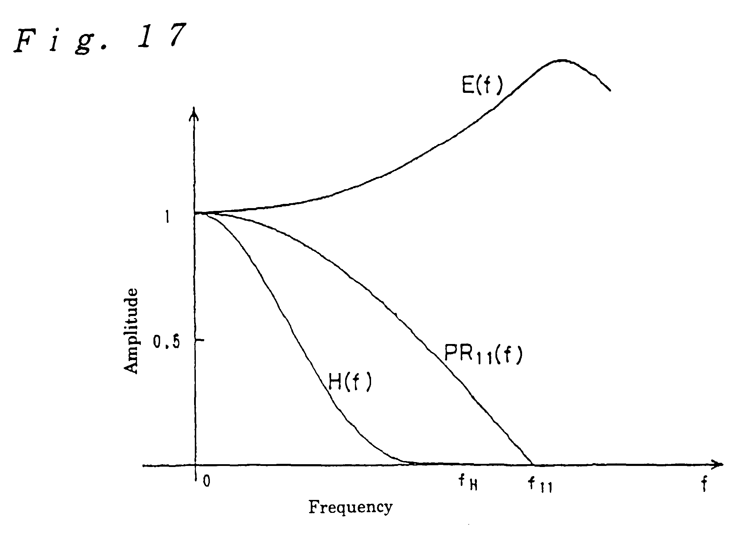

However, when the recording density is increased, the cut-off frequency $f_H$ of transfer function H(f) drops due to interwaveform interference, and becomes, as shown in Fig. 17, relatively lower than the cut-off frequency $f_{11}$ of transfer function $PR_{11}(f)$. In this case there is a region ($f_H \leq f \leq f_{11}$) wherein equation [8] is not satisfied, and equalization error increases in principle. An increase in equalization error means that correction of intersymbol interference weakens, and, thus, high density recording and reproducing is naturally limited.

(2) Even when the recording density is relatively low as shown in Fig. 16, the high band side of transfer function E(f) suggests a value of 1 or greater, and thus acts to emphasize noise. Furthermore, while it is possible to use delay circuits 4a with a short delay time and increase in hardware the number of taps to waveform equalizer 4 as a means of reducing equalization error (least square error), this will obviously increase the complexity of waveform equalizer 4, additive noise increases dramatically with the increase in the number of delay elements, and high band emphasis of noise occurs. This is, therefore, not a particularly effective means of suppressing equalization error. Conversely, the bit error rate increases, and the bit error rate is not significantly improved even after Viterbi decoding is applied.

Therefore, the object of the present invention is to provide an information recording and reproducing apparatus whereby high density recording can be improved and the bit error rate can be reduced by means of finding the optimum partial response method that can be combined with Viterbi decoding to achieve optimum performance from the overall system comprising the encoding circuit, recording and reproducing system, and demodulation circuit.

This object is achieved with an information recording and reproducing apparatus as claimed in claims 1, 2 and 3, respectively.

Preferred embodiments of the invention are subject-matter of the dependent claims.

To achieve the aforementioned objects, the present invention uses a partial response (PR) method using specialized weighting coefficients in an information recording and reproducing apparatus, such as a magneto-optical recording and reproducing apparatus or optical recording and reproducing apparatus, for reproducing information by means of an optical head. PR(1,2,2,1) has been demonstrated to achieve the best high density recording and bit error correction characteristics.

Because the cut-off frequency of the PR(1,2,2,1) transfer function is $1/3T_b$, low relative to the $1/2T_b$ cut-off frequency of the PR(1,1) transfer function, equalization error can also be suppressed to an extremely low level without increasing the number of taps of the equalization means, and interwaveform interference suppression is strong. That it is not necessary to increase the number of taps to the equalization means obviously contributes to a simpler structure in the equalization means, avoids additive noise, and suppresses bit errors. Demodulation capacity is therefore also improved.

Because the cut-off frequency of the PR(1,2,2,1) transfer function is $1/3T_b$, the cut-off frequency of the low pass filter can be set to $1/2T_b$ or less (specifically, $1/2T_b \sim 1/6T_b$) to achieve an excellent noise elimination effect. This also contributes to an improved error correction rate.

When the Viterbi decoding means treats the recording and reproducing means and the equalization means as a convolution encoder, includes the state of the coded symbol input thereto as an internal state, subtracts the state transitions prohibited by (1,7) RLL coding and NRZI coding from the input coded signal states to obtain the ten internal states $S_0 \sim S_9$, and operates using a trellis diagram based on these state transitions, the minimum free distance increases in relation to the increase in the number of internal states. As result, the code correlation becomes stronger, and the error correction rate improves.

Preferred embodiments of the present invention are described hereinbelow with reference to the accompanying figures.

Fig. 1    is a block diagram showing the overall configuration of a magneto-optical recording and reproducing apparatus according to a first embodiment of the invention;

Fig. 2    is a waveform diagram used to describe the partial response method, including PR(1,2,2,1);

Fig. 3    is a state transition diagram of the internal states when the recording and reproducing system and waveform equalizer are treated as a constraint length 4 trellis encoding means in the first embodiment of the invention;

Fig. 4    is a trellis diagram of the time-based internal state changes based on the state diagram shown in Fig. 3;

Fig. 5    is a trellis diagram based on the state diagram of the internal states when the recording and reproducing system and waveform equalizer are treated as a constraint length 5 trellis encoding means in the first embodiment of the invention;

Fig. 6    is a graph of the transfer function H(f) of the recording and reproducing system, and transfer functions $PR_{11}$(f) and $PR_{1221}$(f) in the first embodiment of the invention;

Fig. 7    is an ideal eye pattern (eye diagram) of the equalized waveform output by the waveform equalizer when the NRZI encoded (1,7) RLL coded signal is reproduced in the first embodiment of the invention;

Fig. 8    is a graph showing the relationship of equalization error to the number of taps in the waveform equalizer in the PR(1,2,2,1) method of the present invention and the PR(1,1) method of the prior art;

Fig. 9     is a graph of the relationship between the signal to noise ratio (SNR) of the readback signal, and the bit error rate (BER) of the data after demodulation of the readback signal, where the readback signal is read from an optical recording medium to which 0,1 data of a maximum length period sequence (maximum period sequence) is recorded as the recording data at a 0.25 µm/bit ~ 0.35 µm/bit recording density in the first embodiment of the invention;

Fig. 10    is a block diagram showing the overall configuration of a magneto-optical recording and reproducing apparatus according to a second embodiment of the invention;

Fig. 11    is a block diagram showing the overall configuration of a magneto-optical recording and reproducing apparatus according to the prior art;

Fig. 12    is a block diagram showing the general configuration of a transversal-type waveform equalizer used in a magneto-optical recording and reproducing apparatus;

Fig. 13    is a state diagram of the internal states of the recording and reproducing system and waveform equalizer shown in Fig.11 treated as a finite state automaton (constraint length 1 convolution encoder);

Fig. 14    is a trellis diagram based on the state diagram shown in Fig. 13;

Fig. 15    is a block diagram showing the general configuration of a Viterbi decoding means used in a magneto-optical recording and reproducing apparatus;

Fig. 16    is a graph of the transfer function H(f) of the recording and reproducing system and the transfer function E(f) of the waveform equalizer in Fig.11, and transfer function $PR_{11}$(f) of the PR(1,1) method, when the recording density is low; and

Fig. 17    is a graph of the transfer function H(f) of the recording and reproducing system and the transfer function E(f) of the waveform equalizer in Fig.11, and transfer function $PR_{11}$(f) of the PR(1,1) method, when the recording density is high.

**Embodiment 1**

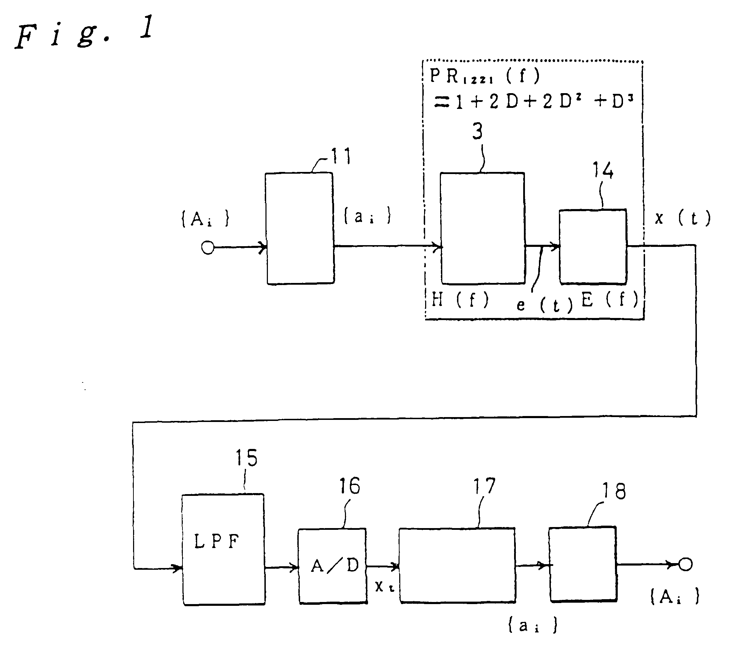

Fig. 1 is a block diagram showing the overall configuration of a magneto-optical recording and reproducing apparatus according to a first embodiment of the invention. In Fig. 1, coding and modulating means 11 comprises a (1,7) RLL (runlength-limited) encoder for RLL encoding the input data bit sequence $\{A_i\}$ (a digital information sequence) using the minimum run constraint $d = 1$ and maximum run constraint $k = 7$; and an NRZI modulator for converting the (1,7) RLL code sequence to an NRZI (non-return-to-zero inversion) code. Constraint $k$ (=7) of the (1,7) RLL code rule offers the advantage of being able to suppress intersymbol interference. In addition, the mark length modulation of the NRZI modulator helps to improve the recording density. The encoded sequence $\{a_i\}$ output from coding and modulating means 11 is then recorded to the magnetic thin-film of the magneto-optical recording medium as the elementary waveform sequence to be recorded using the thermal effect of the semiconductor laser (or other means) of the magneto-optical drive 3.

During the reproduction process, the readback elementary waveform sequence elt) read from the magneto-optical recording medium by means of the optical head of magneto-optical drive 3 is then waveform equalized as the detected signal series by waveform equalizer 14, which is described below.

A transversal filter is used in this embodiment for waveform equalizer 14. As shown in Fig.12, this filter comprises a serial delay stage (SR) of (2L) serially-connected delay circuits 4a each having a tap and a delay time T; (2L + 1) weighting circuits (multipliers) 4b for multiplying the output from each tap (signal discrimination point) by a weighting coefficient $c_j$ (where j = -L, ..., -1, 0, +1, ..., +L); and an adder 4c for obtaining the total sum of the weighted products. Note that it is not necessary for the delay time T of the delay circuits 4a to be equal to the cell width $T_b$ of the coded symbol sequence, and delay circuits 4a of delay time $T = T_b/m$ , for example, may be used to reduce waveform equalization error.

The weighting coefficients $c_j$ of waveform equalizer 14 in this embodiment are set so to achieve a PR(1,2,2,1) partial response characteristic in the recording and reproducing system including the waveform equalizer. Because $c_0 = 1$, $c_1 = 2$, $c_2 = 2$, and $c_3 = 1$ with the PR(1,2,2,1) characteristic, the output waveform (impulse response waveform) h(t) of waveform equalizer 14 can be obtained by equation [9] derived from equation [4] when an impulse is applied to the input of magneto-optical drive 3.

$$h(t) = r(t/T_b) + 2r(t/T_b-1) + 2r(t/T_b-2) + r(t/T_b-3) \qquad [9]$$

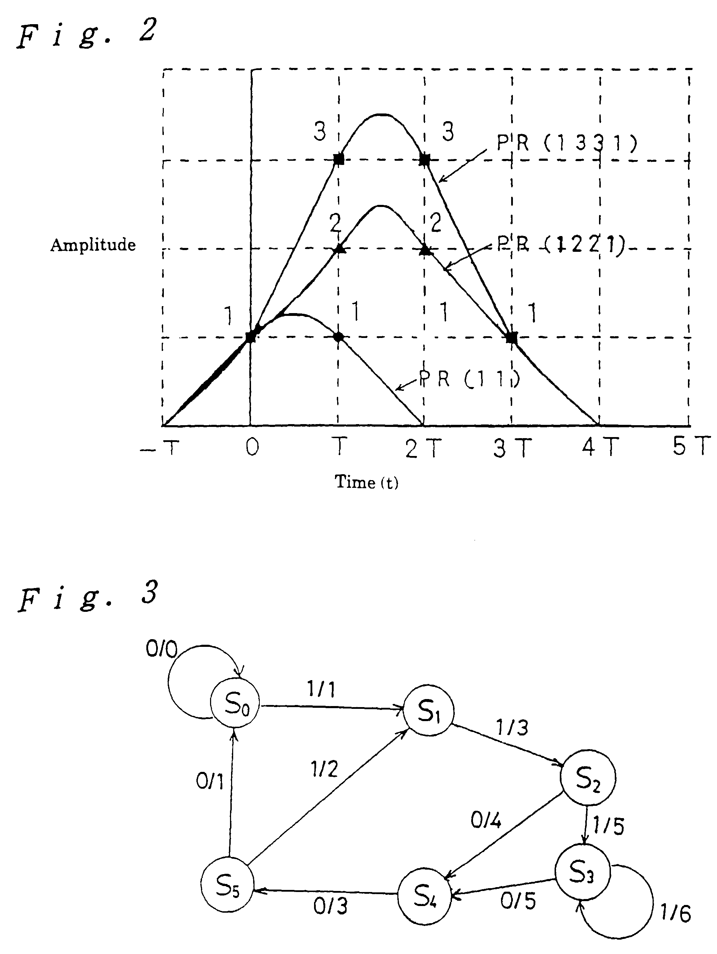

Because $T = T_b$, the response waveform discrimination point occurs every $T_b$, the amplitude value of the impulse response changes in the sequence $0 \rightarrow 1 \rightarrow 2 \rightarrow 2 \rightarrow 1 \rightarrow 0$ as shown in Fig. 2, and the impulse input can be detected by determining the amplitude value. If a delay operator $D = \exp(-j\omega T_b)$ is used, PR(1,2,2,1) can be digitally expressed as $G(D) = (1 + 2D + 2D^2 + D^3)$ where $\omega = 2\pi f$. The output for input $a_k$ at time $k$ can therefore be expressed as $(a_k + 2a_{k-1} + 2a_{k-2} + a_{k-3})$. When $a_k = a_{k-1} = a_{k-2} = a_{k-3} = 1$, six outputs are obtained, and the output signal level of waveform equalizer 14 is a seven-value output of (0, 1, 2, 3, 4, 5, 6). The transfer function $PR_{1221}(f)$ of PR(1,2,2,1) is therefore $|G(f)| = |2\cos(\pi fT)\{1 + 2\cos(2\pi fT)\}^{1/2}|$, and the cut-off frequency $f_{1221} = 1/3T_b$.

Next, white noise added during the readback and equalization processes is removed from the output x(t) of waveform equalizer 14 by low pass filter (LPF) 15. The cut-off frequency of LPF 15 is in the range $1/3T_b \sim 1/6T_b$ where $T_b$ is the 1-bit delay time (cell width) because the cut-off frequency $f_{1221}$ of transfer function $PR_{1221}(f)$ is $1/3T_b$. The low pass filter cut-off frequency is preferably in the range $1/4T_b \sim 1/6T_b$.

The LPF 15 output is then sampled by A/D converter 16 at a discrete-time point of the cell width, and the sampled values are quantized.

The readback digital signal quantized by A/D converter 16 is then decoded by Viterbi decoder 17 applying a maximum likelihood decoding method using the Viterbi algorithm. The Viterbi decoding method applied in this embodiment is adapted to the combination of (1,7) RLL, NRZI, and PR(1,2,2,1) encoding. If magneto-optical drive 3 and waveform equalizer 14 are treated as a finite state machine (a trellis encoder of constraint length 4), the corresponding state transition diagram of the internal states is shown in Fig. 3.

The input information series is output $a_t$ (= 0, 1) of the coding and modulating means 11, and the output code series is output $x_t$ of waveform equalizer 14. The output $x_t$ levels of waveform equalizer 14 are 0, 1, 2, 3, 4, 5, or 6. There is a maximum possible $2^3 = 8$ internal states because there are three delay elements T, but the d = 1 constraint of (1,7) RLL encoding limits the actual number of internal states to six. If the internal states are expressed as $(u_{t-1}, u_{t-2}, u_{t-3})$, state $S_0 = (0,0,0)$, state $S_1 = (1,0,0)$, state $S_2 = (1,1,0)$, state $S_3 = (1,1,1)$, state $S_4 = (0,1,1)$, and state $S_5 = (0,0,1)$ exist, but states (1,0,1) and (0,1,0) do not exist.

Note that in state $S_0$, state $S_0$ is held when input 0 is input, and the output is 0. Note, also, that input/output = $a_t/x_t$, and is expressed as 0/0 in this case. When input 1 is input, the state changes to state $S_1$, and the output is 1. In state $S_1$, the next input is also 1, causing a transition to state $S_2$ and yielding an output of 3. In state $S_2$, input 1 causes a transition to state $S_3$ and output 5; input 0 causes a transition to state $S_4$ and output 4. In state $S_3$, input 1 causes state $S_3$ to be held and output 6; input 0 causes a transition to state $S_4$ and output 5. In state $S_4$, the next input is also 0, causing a transition to state $S_5$ and yielding an output of 3. In state $S_5$, input 0 causes a transition to state $S_0$ and output 1; input 1 causes a transition to state $S_1$ and output 2.

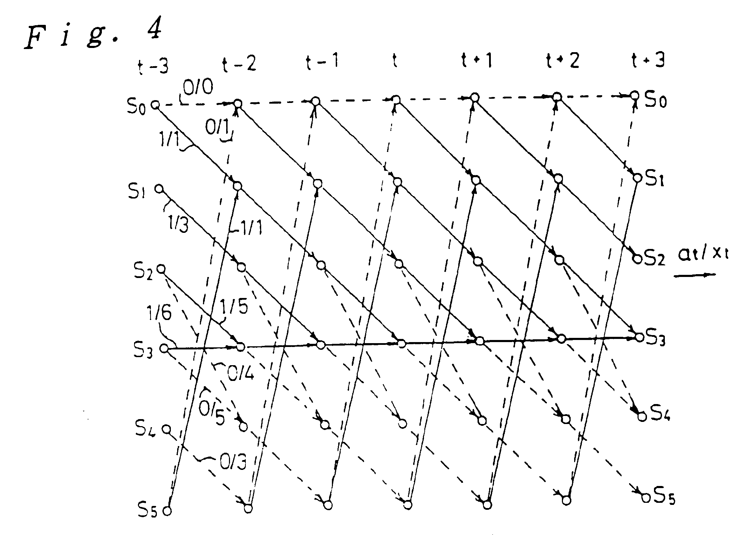

Fig. 4 is a trellis diagram of the time-based internal state changes based on the state transition diagram shown in Fig. 3. In Fig. 4, the dotted directed lines show the transition resulting from input 0, and the solid directed lines show the transition resulting from input 1; the input/output relationship $a_t/x_t$ is shown on each directed line. The Viterbi algorithm for the convolution encoding system using this trellis diagram is substantially identical to that described above. Specifically, the metrics of plural branches merging to each state at each time point (t-3 $\sim$ t+3) are first calculated, the path with the smallest branch metric is then saved as the survivor path, and the history of the survivor path is then traced from the unique final state to arrive at a unique initial state and thereby determine the most probable path. It is to be noted that Viterbi decoder 17 is constructed identically to that shown in Fig. 15.

If the internal states also including the current input $d_t = u_t$ are expressed as states $(u_t, u_{t-1}, u_{t-2}, u_{t-3})$ for the purpose of improving the error correction rate, magneto-optical drive 3 and waveform equalizer 14 can be treated as a constraint length 5 convolution encoder (trellis encoder). While there is a maximum $2^4 = 16$ possible internal states with such an encoding system, the d = 1 constraint of (1,7) RLL encoding limits the actual number of internal states to ten ($S_0 \sim S_9$). The minimum free distance (the minimum Hamming weight on the trellis diagram passing from the initial state through another state, and returning once again to the initial state) becomes longer in an amount equivalent to the addition of four internal states, and the code correlation is therefore strengthened and the error correction rate improved when compared with the case shown in Fig. 3.

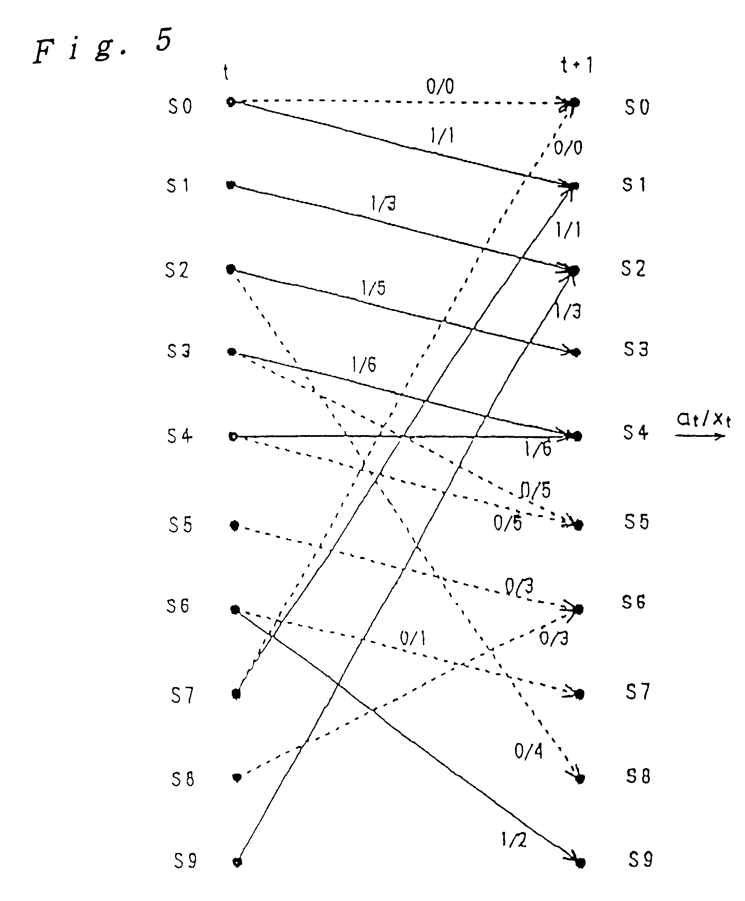

Fig. 5 is a trellis diagram of the time-based internal state changes for this expanded number of internal states. As shown in this trellis diagram, when input 0 is input in state $S_0$, state $S_0$ is held and the output of the waveform equalizer is 0; when input 1 is input in state $S_0$, the state changes to state $S_1$, and the output is 1. In state $S_1$, input 1 causes a transition to state $S_2$ and output 3. In state $S_2$, input 0 causes a transition to state $S_8$ and output 4; input 1 causes a transition to state $S_3$ and output 5. In state $S_3$, input 0 causes a transition to state $S_5$ and output 5; input 1 causes a transition to state $S_4$ and output 6. In state $S_4$, input 0 causes a transition to state $S_5$ and output 5; input 1 causes state $S_4$ to be held and output 6. In state $S_5$, input 0 causes a transition to state $S_6$ and output 3. In state $S_6$,

input 0 causes a transition to state $S_7$ and output 1; input 1 causes a transition to state $S_9$ and output 2. In state $S_7$, input 0 causes a transition to state $S_0$ and output 0; input 1 causes a transition to state $S_1$ and output 1. In state $S_8$, input 0 causes a transition to state $S_6$ and output 3. In state $S_9$, input 1 causes a transition to state $S_2$ and output 3.

Demodulator 18 located at the last stage of the system shown in Fig. 1 demodulates the error correction code $\{a_i\}$ obtained from Viterbi decoder 17 to restore the information sequence $\{A_i\}$, and thus effectively inverses the conversion applied by (1,7) RLL and NRZI encoding. It is to be noted that demodulator 18 comprises a postcoding circuit having the inverse transfer function of waveform equalizer 14.

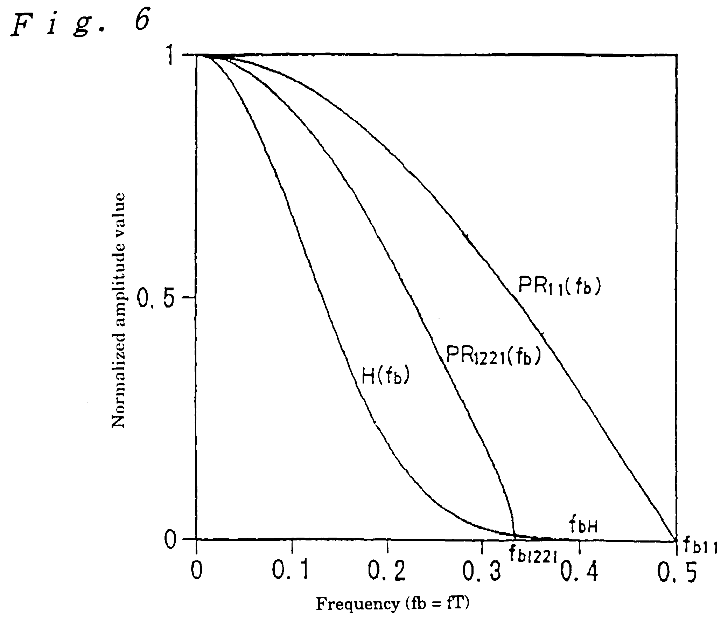

Fig. 6 is a graph showing the transfer function $PR_{1221}(f)$ of PR(1,2,2,1) assuming a normalized frequency of $f_b = fT$. As stated above, transfer function $PR_{1221}(f) = \lfloor 2\cos(\pi f_b)\{1 + 2\cos(2\pi f_b)\}1/2 \rfloor$, and the cut-off frequency $f_{b1221} = 1/3T_b \simeq 0.33$. However, the transfer function $PR_{11}(f)$ of PR(1,1) is $\lfloor 2\cos(\pi f_b) \rfloor$, and the cut-off frequency $f_{b11} = 1/2 = 0.5$. As a result, cut-off frequency $f_{b1221}$ will always be on the low frequency side of cut-off frequency $f_{b11}$. Therefore, even if interwaveform interference occurs as a result of high density recording, and the cut-off frequency $f_{bH}$ of the frequency characteristics of transfer function H(f) of magneto-optical drive 3 becomes lower than the cut-off frequency $f_{b11}$ of transfer function $PR_{11}(f)$, there is a transfer function E(f) of waveform equalizer 14 that will satisfy equation [10] until $f_{bH}$ becomes less than or equal to $f_{b1221}$.

$$H(f) \cdot E(f) = PR_{1221}(f) \qquad\qquad [10]$$

By thus assuring waveform equalization, higher density recording than is possible with the prior art can be achieved. Furthermore, because $PR_{1221}(f)$ converges to 1 more closely following the transfer function H(f) of the recording and reproducing system than $PR_{11}(f)$ in Fig. 6, the transfer function E(f) of waveform equalizer 14 can be lower than that of the conventional PR(1,1) method, and can be set closer to 1. High band emphasis of noise can therefore be suppressed by a corresponding amount, and bit errors reduced.

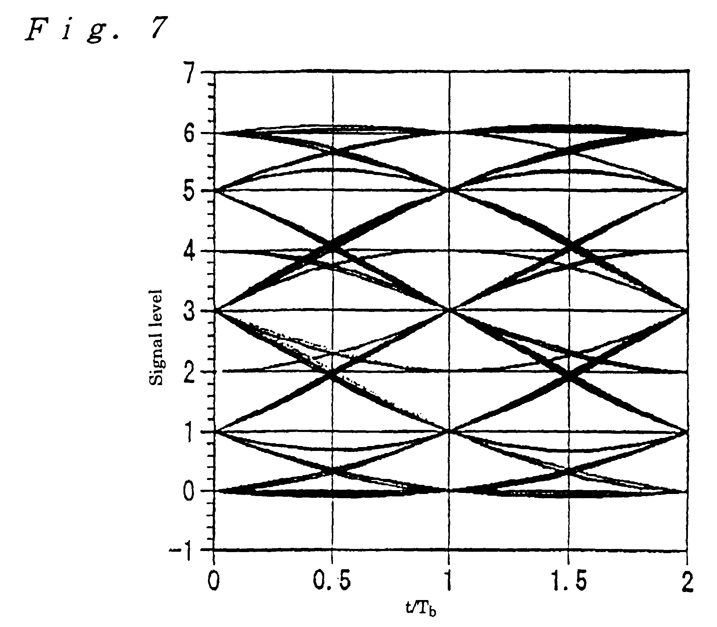

Fig. 7 is an optimum eye pattern (eye diagram) of the equalized waveform output by waveform equalizer 14 when the NRZI encoded (1,7) RLL coded signal is reproduced. This eye diagram overlays all possible waveform combinations of any two adjacent cells of a certain unit interval (cell width) of the elementary waveform series. For example, at time $t/T_b = 1$, the intersections of the curves clearly converge at the discrete points of the 7 values (0, 1, 2, 3, 4, 5, 6), and do not pass between these discrete points. A sufficiently wide margin can therefore be obtained, and signal identification is made easier by providing a threshold element with a threshold value between each of these integer values.

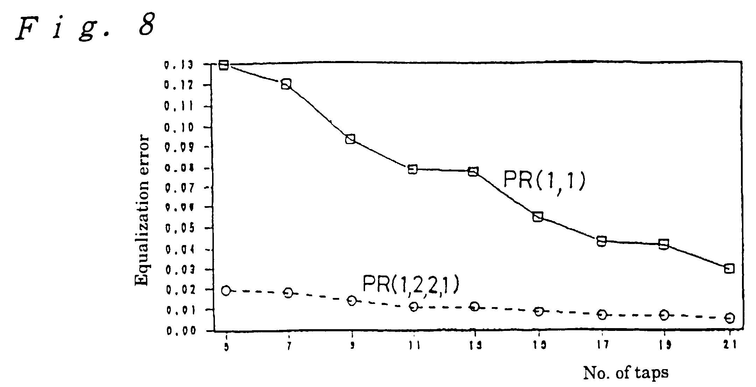

Fig. 8 is a graph showing the relationship between equalization error and the number of taps in the waveform equalizer.

The value of equalization error (the least square error of the optimum PR(1,1) waveform and the actual output waveform of the waveform equalizer) is high with the conventional PR(1,1) method. This is because the PR(1,1) transfer function is greatly separated from the transfer function H(f) of the recording and reproducing system as will be understood from a comparison of the transfer function curves in Fig. 6, and waveform equalization is thus more difficult. Equalization error is approximately 0.13 when there are five taps (discrimination points) to the waveform equalizer, and while equalization error declines as expected as the number of taps increases, equalization error remains relatively high at approximately 0.03 even with 21 taps. Increasing the number of taps also means increasing the number of delay circuits 4a. This accordingly increases the complexity of the waveform equalizer itself, inducing further problems from additive noise and bit error.

With the PR(1,2,2,1) method of the present invention, however, equalization error is already less than 0.02 with only five taps (discrimination points), significantly better than the conventional PR(1,1) method. Because equalization error can be reduced to such a minimal level even with a small number of taps, extreme suppression of intersymbol interference can be achieved, even higher density recording can be achieved, the structure of the waveform equalizer itself can be simplified, and even the waveform equalizer can help reduce the addition of noise.

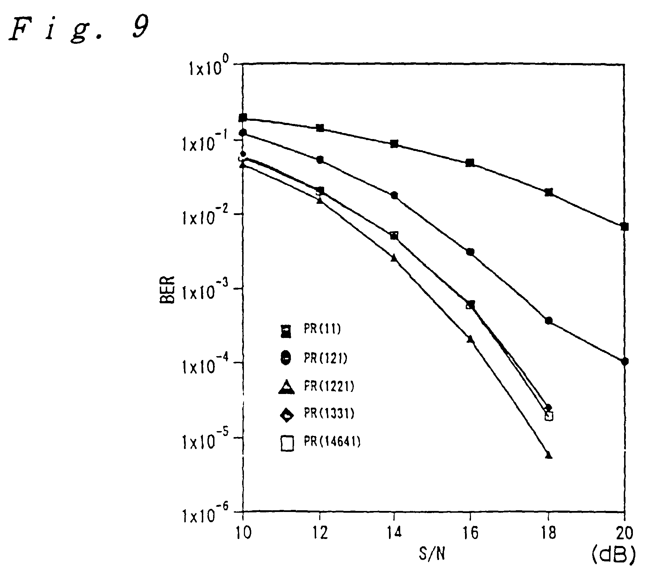

Fig. 9 is a graph of the relationship between the signal-to-noise ratio (S/N ratio) of the readback signal, and the bit error rate (BER) of the data after demodulation of the readback signal, where the readback signal is read from an optical recording medium to which 0,1 data of a maximum length period sequence (maximum period sequence) is recorded as the recording data at a 0.25 µm/bit ~ 0.35 µm/bit recording density. The bit error rate declines in the order PR(1,1) → PR(1,2,1) → PR(1,3,3,1) → PR(1,4,6,4,1) → PR(1,2,2,1).

PR(1,2,2,1) achieves a significant S/N ratio improvement of several decibels when compared with conventional PR(1,1) encoding, and several partial response methods with various intermediate levels of improvement are shown in Fig. 9.

The weighting coefficients are not limited to integer values, and may be real numbers as necessary.

Furthermore, low pass filter 15 in the present embodiment is provided as an analog filter immediately after waveform equalizer 14, but may be alternatively provided as a digital filter after A/D converter 16.

## Embodiment 2

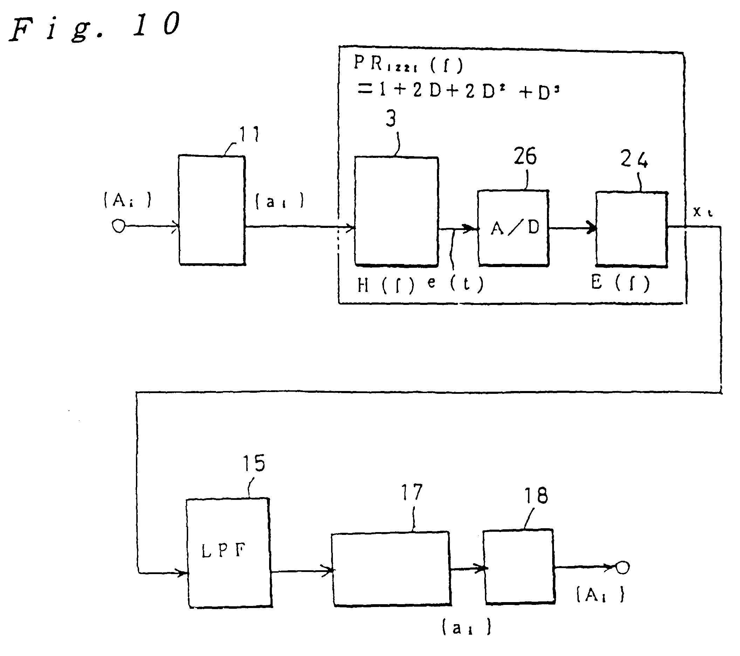

Fig. 10 is a block diagram showing the overall configuration of a magneto-optical recording and reproducing apparatus according to a second embodiment of the invention. Note that like parts are identified by like reference numbers in Figs. 1 and 10, and further description thereof is omitted below.

The present embodiment disposes A/D converter 26 immediately following magneto-optical drive 3, and provides a digital waveform equalizer 24 after A/D converter 26. Low pass filter 15 is a digital filter. The sampling frequency of A/D converter 26 may be cell width $T_b$, but is preferably $T_b/m$ (where $m$ is a natural number) as a means of reducing equalization error. Digital waveform equalizer 24 is generally a non-recursive digital filter (finite impulse response (FIR) filter) of which the plural component delay circuits have a delay time of $T_b/m$.

An improvement in high density recording and the error correction rate can also be achieved by thus constructing the waveform equalizer by means of digital circuits.

Using the PR(1,2,2,1) method, the present invention achieves outstanding high density recording and bit error correction. Equalization error can also be suppressed to an extremely low level without increasing the number of taps of the equalization means, and intersymbol interference suppression is high, because the cut-off frequency of the PR (1,2,2,1) transfer function is $1/3T_b$, low relative to the $1/2T_b$ cut-off frequency of the PR(1,1) transfer function. That it is not necessary to increase the number of equalization means taps obviously contributes to a simpler structure in the equalization means, avoids additive noise, and suppresses bit errors. Demodulation capacity is therefore also improved.

The cut-off frequency of the low pass filter can also be set at $1/2T_b$ or less, and the noise removal effect is significant, because the cut-off frequency of the PR(1,2,2,1) transfer function is $1/3T_b$. This also contributes to improving the error correction rate.

Furthermore, because the PR(1,2,2,1) method uses seven values for code detection in relation to the cubic transfer function of the other delay elements D, it is possible to suppress an increase in the number of delay elements in the waveform equalizer, and the complexity of the A/D converter construction.

When the (1,7) RLL coding rule, NRZI coding rule, and PR(1,2,2,1) method are combined, and the Viterbi decoding means also includes the states of the input encoded symbols as internal states and operates using a trellis diagram based on these state changes, the minimum free distance increases in relation to the increase in the number of internal states. As result, the code correlation becomes stronger, and the error correction rate improves.

While the invention has been described above as being applied to an information recording and reproducing apparatus it will be understood that recording and reproducing may be performed by separate apparatus. In particular, the reproducing aspects of the invention may be used in an apparatus used for and/or capable of reproduction only.

## Claims

**1.** An information reproducing apparatus comprising:

reproducing means (3), including an optical head, for reproducing an analog signal from an NRZI encoded RLL encoded digital information sequence as an elementary waveform sequence from an information recording medium using the optical head;

waveform equalization means (14) comprising a transversal filter having delay elements of a predetermined delay time for waveform equalizing said elementary waveform sequence by applying transfer function G(D) to said elementary waveform sequence to produce an equalized waveform sequence where G(D) = PR($c_0$, $c_1$,...$c_n$) = ($c_0 + c_1D + c_2D^2 + ...c_nD^n$), D is a delay operator the delay time of which is cell width $T_b$ of the NRZI encoded sequence, and $c_0$, $c_1$,...$c_n$ are weighting coefficients;

low pass filter means (15) for removing high frequency noise from said equalized waveform sequence;

analog/digital (A/D) conversion means (16) for sampling and quantizing the equalized waveform sequence supplied from said low pass filter means to produce a digital output;

Viterbi decoding means (17) for comparing said digital output with a particular expected value to obtain a most probable path as a decoded digital information sequence; and

demodulating means (18) for demodulating said decoded digital information sequence by applying the inverse of RLL encoding and NRZI encoding to the decoded digital information sequence;

**characterized in that** the transfer function G(D) = PR(1,2,2,1).

2. An information reproducing apparatus comprising:

reproducing means (3), including an optical head, for reproducing an analog signal from an NRZI encoded RLL encoded digital information sequence as an elementary waveform sequence from an information recording medium using the optical head;
waveform equalization means (14) comprising a transversal filter having delay elements of a predetermined delay time for waveform equalizing said elementary waveform sequence by applying transfer function G(D) to said elementary waveform sequence to produce an equalized waveform sequence where $G(D) = PR(c_0, c_1,...c_n) = (c_0 + c_1D + c_2D^2 +...c_nD^n)$, D is a delay operator the delay time of which is cell width $T_b$ of the NRZI encoded sequence, and $c_0, c_1,...c_n$ are weighting coefficients;
analog/digital (A/D) conversion means (16) for sampling and quantizing the equalized waveform sequence to produce a digital output;
low pass filter means (15) for removing high frequency noise from said digital output;
Viterbi decoding means (17) for comparing the digital output supplied from said low pass filter means with a particular expected value to obtain a most probable path as a decoded digital information sequence; and
demodulating means (18) for demodulating said decoded digital information sequence by applying the inverse of RLL encoding and NRZI encoding to the decoded digital information sequence;
wherein the transfer function $G(D) = PR(1,2,2,1)$.

3. An information reproducing apparatus comprising:

reproducing means (3), including an optical head, for reproducing an analog signal from an NRZI encoded RLL encoded digital information sequence as an elementary waveform sequence from an information recording medium using the optical head;
analog/digital (A/D) conversion means (26) for sampling the reproduced elementary waveform sequence at a sampling rate of 1/m (where m is a natural number) the cell width $T_b$ of said NRZI encoded sequence, and for quantizing the signal samples to produce a digital output;
waveform equalization means (24) comprising a transversal filter having delay elements of a predetermined delay time for waveform equalizing said digital output by applying transfer function G(D) to the digital output from the A/D conversion means to produce an equalized waveform sequence where $G(D) = PR(c_0, c_1,...c_n) = (c_0 + c_1D + c_2D^2 +...c_nD^n)$, D is a delay operator the delay time of which is cell width $T_b$, and $c_0, c_1,...c_n$ are weighting coefficients;
low pass filter means (15) for removing high frequency noise from the waveform equalized sequence;
Viterbi decoding means (17) for comparing the output of the low pass filter means with a particular expected value to obtain a most probable path as a decoded digital information sequence; and
demodulating means (18) for demodulating said decoded digital information sequence by applying the inverse of RLL encoding and NRZI encoding to the decoded digital information sequence;
wherein the transfer function $G(D) = PR(1,2,2,1)$.

4. The apparatus according to any one of claims 1 to 3 wherein the cut-off frequency of the low pass filter means is within the range $1/2T_b \sim 1/6T_b$.

5. The apparatus according to Claim 4 wherein the Viterbi decoding means treats the reproducing means and the equalization means as a convolution encoder,

includes the state of the coded symbol input thereto as an internal state,
subtracts the state transitions prohibited by (1,7) RLL encoding and NRZI encoding from the states of the NRZI encoded sequence to obtain ten internal states S0 $\sim$ S9, and
operates according to a trellis diagram based on these state transitions.

6. The apparatus according to Claim 5 wherein in the state transition diagram of internal states $S_0 \sim S_9$, the state remains as state $S_0$ and outputs 0 from the waveform equalization means when input 0 to the reproducing means is received as an input in state $S_0$,

shifts to state $S_1$ and outputs 1 when 1 is received as an input in state $S_0$,
shifts to state $S_2$ and outputs 3 when 1 is received as an input in state $S_1$,
shifts to state $S_8$ and outputs 4 when 0 is received as an input in state $S_2$,
shifts to state $S_3$ and outputs 5 when 1 is received as an input in state $S_2$,

shifts to state $S_5$ and outputs 5 when 0 is received as an input in state $S_3$,
shifts to state $S_4$ and outputs 6 when 1 is received as an input in state $S_3$,
shifts to state $S_5$ and outputs 5 when 0 is received as an input in state $S_4$,
remains as state $S_4$ and outputs 6 when 1 is received as an input in state $S_4$,
shifts to state $S_6$ and outputs 3 when 0 is received as an input in state $S_5$,
shifts to state $S_7$ and outputs 1 when 0 is received as an input in state $S_6$,
shifts to state $S_9$ and outputs 2 when 1 is received as an input in state $S_6$,
shifts to state $S_0$ and outputs 0 when 0 is received as an input in state $S_7$,
shifts to state $S_1$ and outputs 1 when 1 is received as an input in state $S_7$,
shifts to state $S_6$ and outputs 3 when 0 is received as an input in state $S_8$, and
shifts to state $S_2$ and outputs 3 when 1 is received as an input in state $S_9$.

**7.** An information recording and reproducing apparatus comprising:

an information reproducing apparatus according to any one of the preceding claims;
coding and modulating means (11) for RLL (runlength-limited) encoding a digital information sequence to produce a RLL encoded digital information sequence and for NRZI (non-return-to-zero inverted) encoding the RLL encoded digital information sequence; and
recording and reproducing means (3), including said optical head, for recording the NRZI encoded sequence on an information recording medium, and for subsequently reproducing said analog signal from said NRZI encoded sequence as an elementary waveform sequence from said information recording medium using the optical head.

**Patentansprüche**

**1.** Informationswiedergabegerät, umfassend:

eine Wiedergabeanordnung (3) mit einem optischen Kopf zum Wiedergeben eines Analogsignals aus einer NRZI-codierten RLL-codierten Digitalinformationsfolge als einer Elementarwellenformfolge von einem Informationsaufzeichnungsmedium unter Verwendung des optischen Kopfs;
eine Wellenformentzerrungsanordnung (14), die ein Transversalfilter mit Verzögerungselementen einer vorbestimmten Verzögerungszeit umfaßt, zum Wellenformentzerren der Elementarwellenformfolge durch Anwenden einer Übertragungsfunktion G(D) auf die Elementarwellenfolge, um eine entzerrte Wellenformfolge zu erzeugen, wobei $G(D) = PR(c_0, c_1, ...c_n) = (c_0 + c_1 D + c_2 D^2 + ...c_n D^n)$, D ein Verzögerungsoperator ist, dessen Verzögerungszeit die Zellenbreite $T_b$ der NRZI-codierten Folge ist, und $c_0, c_1, ... c_n$ Gewichtungskoeffizienten sind;
eine Tiefpaßfilteranordnung (15) zum Entfemen von hochfrequentem Rauschen aus der entzerrten Wellenformfolge;
eine Analog/Digital (A/D)-Umsetzungsanordnung (16) zum Abtasten und Quantisieren der aus der Tiefpaßfilteranordnung gelieferten entzerrten Wellenformfolge, um ein digitales Ausgangssignal zu erzeugen;
eine Viterbi-Decodieranordnung (17) zum Vergleichen des digitalen Ausgangssignals mit einem speziellen Erwartungswert, um einen wahrscheinlichsten Weg als decodierte Digitalinformationsfolge zu gewinnen; und
eine Demodulieranordnung (18) zum Demodulieren der decodierten Digitalinformationsfolge durch Anwenden des Inversen der RLL-Codierung und der NRZI-Codierung auf die decodierte Digitalinformationsfolge;

**dadurch gekennzeichnet**, daß die Übertragungsfunktion $G(D) = PR(1,2,2,1)$ ist.

**2.** Informationswiedergabegerät, umfassend:

eine Wiedergabeanordnung (3) mit einem optischen Kopf zum Wiedergeben eines Analogsignals aus einer NRZI-codierten RLL-codierten Digitalinformationsfolge als einer Elementarwellenformfolge von einem Informationsaufzeichnungsmedium unter Verwendung des optischen Kopfs;
eine Wellenforrmentzerrungsanordnung (14), die ein Transversalfilter mit Verzögerungselementen einer vorbestimmten Verzögerungszeit umfaßt, zum Wellenformentzerren der Elementarwellenformfolge durch Anwenden einer Übertragungsfunktion G(D) auf die Elementarwellenfolge, um eine entzerrte Wellenformfolge zu erzeugen, wobei $G(D) = PR(c_0, c_1, ...c_n = (c_0 + c_1 D + c_2 D^2 + ...c_n D^n)$, D ein Verzögerungsoperator ist, dessen Verzögerungszeit die Zellenbreite $T_b$ der NRZI-codierten Folge ist, und $c_0, c_1, ...c_n$ Gewichtungskoeffizienten

sind;

eine Analog/Digital (A/D)-Umsetzungsanordnung (16) zum Abtasten und Quantisieren der entzerrten Wellenformfolge, um ein digitales Ausgangssignal zu erzeugen;

eine Tiefpaßfilteranordnung (15) zum Entfemen von hochfrequentem Rauschen aus dem digitalen Ausgangssignal;

eine Viterbi-Decodieranordnung (17) zum Vergleichen des aus der Tiefpaßfilteranordnung gelieferten digitalen Ausgangssignals mit einem speziellen Erwartungswert, um einen wahrscheinlichsten Weg als decodierte Digitalinformationsfolge zu gewinnen; und

eine Demodulieranordnung (18) zum Demodulieren der decodierten Digitalinformationsfolge durch Anwenden des Inversen der RLL-Codierung und der NRZI-Codierung auf die decodierte Digitalinformationsfolge;

wobei die Übertragungsfunktion G(D) = PR(1,2,2,1) ist.

3. Informationswiedergabegerät, umfassend:

eine Wiedergabeanordnung (3) mit einem optischen Kopf zum Wiedergeben eines Analogsignals aus einer NRZI-codierten RLL-codierten Digitalinformationsfolge als einer Elementarwellenformfolge von einem Informationsaufzeichnungsmedium unter Verwendung des optischen Kopfs;

eine Analog/Digital (A/D)-Umsetzungsanordnung (26) zum Abtasten der wiedergegebenen Elementarwellenformfolge bei einer Abtastrate der 1/m-fachen Zellenbreite $T_b$ der NRZI-codierten Folge (wobei m eine natürliche Zahl ist), und zum Quantisieren der Signalabtastwerte, um ein digitales Ausgangssignal zu erzeugen;

eine Wellenformentzerrungsanordnung (24), die ein Transversalfilter mit Verzögerungselementen einer vorbestimmten Verzögerungszeit umfaßt, zum Wellenformentzerren des digitalen Ausgangssignals durch Anwenden einer Übertragungsfunktion G(D) auf das digitale Ausgangssignal von der A/D-Umsetzungsanordnung, um eine entzerrte Wellenformfolge zu erzeugen, wobei $G(D) = PR(c_0, c_1,...c_n) = (c_0 + c_1 D + c_2 D^2 + ... c_n D^n)$, D ein Verzögerungsoperator ist, dessen Verzögerungszeit die Zellenbreite $T_b$ ist, und $c_0, c_1 ,...,c_n$ Gewichtungskoeffizienten sind;

eine Tiefpaßfilteranordnung (15) zum Entfemen von hochfrequentem Rauschen aus der entzerrten Wellenformfolge;

eine Viterbi-Decodieranordnung (17) zum Vergleichen des Ausgangssignals der Tiefpaßfilteranordnung mit einem speziellen Erwartungswert, um einen wahrscheinlichsten Weg als decodierte Digitalinformationsfolge zu gewinnen; und

eine Demodulieranordnung (18) zum Demodulieren der decodierten Digitalinformationsfolge durch Anwenden des Inversen der RLL-Codierung und der NRZI-Codierung auf die decodierte Digitalinformationsfolge;

wobei die Übertragungsfunktion G(D) = PR(1,2,2,1) ist.

4. Gerät nach einem der Ansprüche 1 bis 3, bei dem die Grenzfrequenz der Tiefpaßfilteranordnung im Bereich von $1/2T_b$ bis $1/6T_b$ liegt.

5. Gerät nach Anspruch 4, bei dem die Viterbi-Decodieranordnung die Wiedergabeanordnung und die Entzerrungsanordnung als einen Faltungscodierer behandelt,

den Zustand des in sie eingegebenen codierten Symbols als einen internen Zustand enthält,
die durch die (1,7)-RLL-Codierung und die NRZI-Codierung verbotenen Zustandsübergänge von den Zuständen der NRZI-codierten Folge subtrahiert, um zehn interne Zustände $S_0$ bis $S_9$ zu gewinnen, und
nach Maßgabe eines Trellis-Diagramms auf der Basis dieser Zustandsübergänge arbeitet.

6. Gerät nach Anspruch 5, bei dem beim Zustandsübergangsdiagramm der internen Zustände $S_0$ bis $S_9$ der Zustand als Zustand $S_0$ bleibt und 0 aus der Wellenformentzerrungsanordnung ausgegeben wird, wenn die Eingabe 0 bei der Wiedergabeanordnung als Eingabe im Zustand $S_0$ empfangen wird,

in den Zustand $S_1$ übergeht und 1 ausgibt, wenn 1 als Eingabe im Zustand $S_0$ empfangen wird,
in den Zustand $S_2$ übergeht und 3 ausgibt, wenn 1 als Eingabe im Zustand $S_1$ empfangen wird,
in den Zustand $S_8$ übergeht und 4 ausgibt, wenn 0 als Eingabe im Zustand $S_2$ empfangen wird,
in den Zustand $S_3$ übergeht und 5 ausgibt, wenn 1 als Eingabe im Zustand $S_2$ empfangen wird,
in den Zustand $S_5$ übergeht und 5 ausgibt, wenn 0 als Eingabe im Zustand $S_3$ empfangen wird,
in den Zustand $S_4$ übergeht und 6 ausgibt, wenn 1 als Eingabe im Zustand $S_3$ empfangen wird,
in den Zustand $S_5$ übergeht und 5 ausgibt, wenn 0 als Eingabe im Zustand $S_4$ empfangen wird,
als Zustand $S_4$ verbleibt und 6 ausgibt, wenn 1 als Eingabe im Zustand $S_4$ empfangen wird,

in den Zustand $S_6$ übergeht und 3 ausgibt, wenn 0 als Eingabe im Zustand $S_5$ empfangen wird,
in den Zustand $S_7$ übergeht und 1 ausgibt, wenn 0 als Eingabe im Zustand $S_6$ empfangen wird,
in den Zustand $S_9$ übergeht und 2 ausgibt, wenn 1 als Eingabe im Zustand $S_6$ empfangen wird,
in den Zustand $S_0$ übergeht und 0 ausgibt, wenn 0 als Eingabe im Zustand $S_7$ empfangen wird,
in den Zustand $S_1$ übergeht und 1 ausgibt, wenn 1 als Eingabe im Zustand $S_7$ empfangen wird,
in den Zustand $S_6$ übergeht und 3 ausgibt, wenn 0 als Eingabe im Zustand $S_8$ empfangen wird, und
in den Zustand $S_2$ übergeht und 3 ausgibt, wenn 1 als Eingabe im Zustand $S_9$ empfangen wird.

**7.** Informationsaufzeichnungs- und -wiedergabegerät, umfassend:

ein Informationswiedergabegerät gemäß einem der vorhergehenden Ansprüche;
eine Codier- und Modulieranordnung (11) zum RLL (runlength-limited bzw. lauflängenbegrenzten)-Codieren einer Digitalinformationsfolge zur Erzeugung einer RLL-codierten Digitalinformationsfolge und zum NRZI (non-return-to-zero inverted bzw. keine Rückkehr zu Null invertiert)-Codieren der RLL-codierten Digitalinformationsfolge; und
eine Aufzeichnungs- und Wiedergabeanordnung (3), die den optischen Kopf enthält, zum Aufzeichnen der NRZI-codierten Folge auf einem Informationsaufzeichnungsmedium und zum nachfolgenden Wiedergeben des Analogsignals aus der NRZI-codierten Folge als eine Elementarwellenformfolge von dem Informationsaufzeichnungsmedium unter Verwendung des optischen Kopfs.

## Revendications

**1.** Dispositif de reproduction d'information comportant :

des moyens (3) de reproduction, comportant une tête optique, destinés à reproduire un signal analogique à partir d'une séquence d'information numérique codée en RLL codée en NRZI en tant qu'une séquence de formes d'onde élémentaires provenant d'un support d'enregistrement d'information en utilisant la tête optique ;
des moyens (14) d'égalisation de forme d'onde comportant un filtre transversal ayant des éléments à retard d'un temps de retard déterminé à l'avance pour une égalisation de forme d'onde de la séquence de formes d'onde élémentaires en appliquant une fonction G(D) de transfert à la séquence de formes d'onde élémentaires pour produire une séquence de formes d'onde égalisées où $G(D) = PR(c_0, c_1, ...c_n) = c_0 + c_1 D + c_2 D^2 + ... c_n D^n)$, D est un opérateur à retard dont le temps de retard est égal à la largeur $T_b$ de cellule de la séquence codée NRZI, et $c_0, c_1, ...c_n$ sont des coefficients de pondération ;
des moyens (15) de filtre passe-bas destinés à éliminer des bruits à haute fréquence de la séquence de forme d'onde égalisée ;
des moyens (16) de conversion analogique/numérique (A/N) destinés à échantillonner et quantifier la séquence de forme d'onde égalisée fournie à partir des moyens formant filtre passe-bas pour produire une sortie numérique ;
des moyens (17) de décodage de Viterbi destinés à comparer la sortie numérique avec une valeur attendue particulière pour obtenir un trajet le plus probable en tant qu'une séquence d'information numérique décodée ; et
des moyens (18) de démodulation destinés à démoduler la séquence d'information numérique décodée en appliquant l'inverse du codage RLL et du codage NRZI à la séquence d'information numérique décodée ;

caractérisé en ce que la fonction G(D) de transfert est égale à PR(1,2,2,1).

**2.** Dispositif de reproduction d'information comportant :

des moyens (3) de reproduction, comportant une tête optique, destinés à reproduire un signal analogique à partir d'une séquence d'information numérique codée RLL et codée NRZI en tant qu'une séquence de formes d'onde élémentaires à partir d'un support d'enregistrement d'information en utilisant la tête optique ;
des moyens (14) d'égalisation de forme d'onde comportant un filtre transversal ayant des éléments à retard d'un temps de retard déterminé à l'avance pour une égalisation de forme d'onde de la séquence de formes d'onde élémentaires en appliquant la fonction G(D) de transfert à la séquence de formes d'onde élémentaires pour produire une séquence de forme d'onde égalisée, où $G(D) = PR(c_0, c_1, ... c_n) = c_0 + c_1 D + c_2 D^2 + ... c_n D^n)$, D étant un opérateur à retard dont le temps de retard est égal à la largeur $T_b$ de cellule de la séquence codée en NRZI, et $c_0, c_1, ...c_n$ sont des coefficients de pondération ;

des moyens (16) de conversion analogiques/numériques (A/N) destinés à échantillonner et quantifier la séquence de formes d'onde égalisées pour produire une sortie numérique ;

des moyens (15) formant filtre passe-bas destinés à éliminer du bruit à haute fréquence de la sortie numérique ;

des moyens (17) de décodage de Viterbi destinés à comparer la sortie numérique fournie à partir des moyens formant filtre passe-bas d'une valeur attendue particulière pour obtenir un trajet le plus probable en tant qu'une séquence d'information numérique décodée ; et

des moyens (18) de démodulation destinés à démoduler la séquence d'information numérique décodée en appliquant l'inverse du codage RLL et du codage NRZI à la séquence d'information numérique décodée ;

dans lequel la fonction G(D) de transfert est égale à PR(1,2,2,1).

3. Dispositif de reproduction d'information comportant :

des moyens (3) de reproduction, comportant une tête optique, destinés à reproduire un signal analogique à partir d'une séquence d'information numérique codée en RLL codée en NRZI en tant qu'une séquence de forme d'onde élémentaire à partir d'un support d'enregistrement d'information en utilisant la tête optique ;

des moyens (26) de conversion analogique/numérique (A/N) destinés à échantillonner la séquence de formes d'onde élémentaires reproduite à un taux d'échantillonnage de 1/m (où m est un entier naturel) fois la largeur $T_b$ de cellule de la séquence codée en NRZI, et destinés à quantifier les échantillons de signal pour produire une sortie numérique ;

des moyens (24) d'égalisation de forme d'onde comportant un filtre transversal ayant des éléments à retard d'un temps de retard déterminé à l'avance pour une égalisation de forme d'onde de la sortie numérique en appliquant une fonction G(D) de transfert à la sortie numérique à partir des moyens de conversion A/N pour produire une séquence de forme d'onde égalisée, où $G(D) = PR(c_0, c_1, \dots c_n) = (c_0 + c_1 D + c_2 D^2 + \dots c_n D^n)$, D étant un opérateur à retard dont le temps de retard est égal à la largeur $T_b$ de cellule, et $c_0, c_1, \dots c_n$ sont des coefficients de pondération ;

des moyens (15) formant filtre passe-bas destinés à éliminer du bruit à haute fréquence de la séquence égalisée de forme d'onde ;

des moyens (17) de décodage de Viterbi destinés à comparer la sortie des moyens formant filtre passe-bas avec une valeur attendue particulière pour obtenir un trajet le plus probable en tant qu'une séquence d'information numérique décodée ; et

des moyens (18) de démodulation destinés à démoduler la séquence d'information numérique décodée en appliquant l'inverse du codage RLL et du codage NRZI à la séquence d'information numérique décodée ;

dans lequel la fonction G(D) de transfert est égale à PR(1,2,2,1).

4. Dispositif suivant l'une quelconque des revendications 1 à 3, dans lequel la fréquence de coupure des moyens formant filtre passe-bas est comprise dans le domaine de $1/2T_b \sim 1/6\ T_b$.

5. Dispositif suivant la revendication 4, dans lequel les moyens de décodage de Viterbi traitent les moyens de reproduction et les moyens d'égalisation en tant qu'un codeur de convolution,

comporte l'état du symbole codé qui lui est entré en tant qu'un état interne,

soustrait les transitions d'état interdites par le codage RLL (1,7) et le codage NRZI des états de la séquence codée NRZI pour obtenir dix états S0 à S9 internes, et

fonctionne conformément à un diagramme en treillis fondé sur ces transitions d'état.

6. Dispositif suivant la revendication 5, dans lequel dans le diagramme de transition d'état des états $S_0$ à $S_9$ internes, l'état reste en tant que l'état $S_0$ et sort 0 à partir des moyens d'égalisation de forme d'onde lorsque l'entrée 0 vers les moyens de reproduction sont reçus en tant qu'une entrée dans l'état Sose décale vers l'état $S_1$ et sort 1 lorsque 1 est reçu en tant qu'une entrée dans l'état $S_0$,

se décale vers l'état $S_1$ et sort 1 lorsque 1 est reçue en tant qu'une entrée dans l'état $S_0$.

se décale vers l'état $S_2$ et sort 3 lorsque 1 est reçu en tant qu'une entrée dans l'état $S_1$,

se décale vers l'état $S_8$ et sort 4 lorsque 0 est reçu en tant qu'une entrée dans l'état $S_2$,

se décale vers l'état $S_3$ et sort 5 lorsque 1 est reçu en tant qu'une entrée dans l'état $S_2$,

se décale vers l'état $S_5$ et sort 5 lorsque 0 est reçu en tant qu'une entrée dans l'état $S_3$,

se décale vers l'état $S_4$ et sort 6 lorsque 1 est reçu en tant qu'une entrée dans l'état $S_3$,

se décale vers l'état $S_5$ et sort 5 lorsque 0 est reçu en tant qu'une entrée dans l'état $S_4$,

reste en tant que état $S_4$ et sort 6 lorsque 1 est reçu en tant qu'une entrée dans l'état $S_4$,

se décale vers l'état $S_6$ et sort 3 lorsque 0 est reçu en tant qu'une entrée dans l'état $S_5$,
se décale vers l'état $S_7$ et sort 1 lorsque 0 est reçu en tant qu'une entrée dans l'état $S_6$,
se décale vers l'état $S_9$ et sort 2 lorsque 1 est reçu en tant qu'une entrée dans l'état $S_6$,
se décale vers l'état $S_0$ et sort 0 lorsque 0 est reçu en tant qu'une entrée dans l'état $S_7$,
se décale vers l'état $S_1$ et sort 1 lorsque 1 est reçu en tant qu'une entrée dans l'état $S_7$,
se décale vers l'état $S_6$ et sort 3 lorsque 0 est reçu en tant qu'une entrée dans l'état $S_8$, et
se décale vers l'état $S_2$ et sort 3 lorsque 1 est reçu en tant qu'une entrée dans l'état $S_9$,

**7.** Dispositif de reproduction et d'enregistrement d'information comportant :

un dispositif de reproduction d'information conformément à l'une quelconque des revendications précédentes ;
des moyens (11) de codage et de modulation pour un codage RLL (à longueur de course limitée) d'une séquence d'information numérique pour produire une séquence d'information numérique codée en RLL, et pour coder en NRZI (inversion de non retour à zéro) la séquence d'information numérique codée en RLL ; et
des moyens (3) de reproduction et d'enregistrement, comportant la tête optique, destinés à enregistrer la séquence codée en NRZI sur un support d'enregistrement d'information, et pour ensuite reproduire le signal analogique à partir de la séquence codée en NRZI en tant qu'une séquence de formes d'onde élémentaires à partir du support d'enregistrement d'information en utilisant la tête optique.

# Fig. 1

$$PR_{1221}(f)$$
$$= 1 + 2D + 2D^2 + D^3$$

{A_i} ──→ [11] ──{a_i}──→ [3] ──→ [14] ── x(t)
         H(f)   e(t)   E(f)

{A_i} ←── [18] ←── [17] ←── [16] ←── [15]
         {a_i}         x_t    A/D    LPF

## F i g . 2

## F i g . 3

Fig. 4

# Fig. 5

Fig. 6

*F i g . 7*

*F i g .  8*

Fig. 9

$$F\,i\,g.\quad 1\,0$$

PR$_{1221}$ (f)
= 1 + 2 D + 2 D$^2$ + D$^3$

11

(A$_i$)     (a$_i$)

3

26

24

A／D

X$_t$

H (f) e (t)

E (f)

15

17

18

LPF

(A$_i$)

(a$_i$)

$Fig.\ 11$

# Fig. 12

Fig. 13

$d_t / x_t$

0/0

1/1

$S_1$

$S_2$

1/2

0/1

Fig. 14

$S_1$ t-2 0/0 t-1 0/0 t 0/0 t+1 0/0 t+2

0/1 0/1 0/1 0/1 $d_t / x_t$

1/1 1/1 1/1 1/1

$S_2$ 1/2 1/2 1/2 1/2

Fig. 15

sample value

7a 7b 7c 7d

Fig. 16

Fig. 17